# EUROPÄISCHE PATENTSCHRIFT

(11) **EP 2 311 695 B1**
(45) Veröffentlichungstag und Bekanntmachung des Hinweises auf die Patenterteilung: **14.12.2011**
(21) Anmeldenummer: 09013031.1
(22) Anmeldetag: 15.10.2009
(51) Int. Cl.: B60T 1/14, B60T 7/08, B60T 7/12, B62D 37/02

(54) **Notbremssystem für Fahrzeuge, insbesondere Kraftfahrzeuge**
Emergency braking system for vehicles, in particular motor vehicles
Système de freinage d'urgence pour véhicules, notamment des véhicules automobiles

(43) Veröffentlichungstag der Anmeldung: 20.04.2011
(73) Patentinhaber: Fuchs, Werner Karl Heinz, 80634 München (DE)
(72) Erfinder: Fuchs, Werner Karl Heinz, 80634 München (DE)

(56) Entgegenhaltungen:
- WO-A1-03/020560
- DE-A1- 2 306 044
- GB-A- 2 295 799
- JP-A- 6 286 585
- JP-A- 2007 196 892
- US-A- 4 317 507
- US-A- 5 638 923

## Beschreibung

Die Erfindung betrifft ein Notbremssystem nach dem Oberbegriff des Anspruchs 1.

In Notfällen ist es besonders wichtig, die Bodenhaftung von Fahrzeugen erhöhten zu können, um Bremswege zu verkürzen und auch die Gefahren des Schleuderns und des Ausbrechens aus Kurven herabzusetzen.

Der Nutzen eines Notbremssystems wird deutlich, wenn man beispielsweise bedenkt, dass ein auf griffiger Fahrbahn aus 100 km/h vollgebremstes Auto noch ca. 70 km/h Geschwindigkeit hat - mit der es verunglücken wie auffahren kann - wenn das mit Hilfe eines Notbremssystems doppelt so stark verzögerte Auto schon steht.

Es ist bekannt, unter Fahrzeugen Räume abzugrenzen und daraus Luft abzusaugen, so dass das Fahrzeug durch den erzeugten Unterdruck stärker auf die Fahrbahn gepreßt und die Bodenhaftung dadurch verstärkt wird. Die Patentschrift DE-PS 441 938 beschreibt z.B. eine derartige Vorrichtung zur Vergrößerung des Raddrucks beim Bremsen durch Erzeugung eines Unterdrucks unter dem Fahrzeug mittels eines Ventilators. Der Luftzutrittsquerschnitt unter dem Wagen kann durch herabgeklappte Seitenwände verkleinert werden. Eine praktische Ausführung dieser Art beschrieb die Zeitschrift "auto, motor und sport" Jahrgang 1970, Heft 16, auf S.32 bis 34.

Eine andere Patentschrift (DE-PS 22 51 152) zeigt eine Vorrichtung, mit der ein Unterdruckraum unter dem Fahrzeug durch ein aufblasbares, schlauchartiges Ringkiesen gebildet wird. Dieses Ringkissen, unter dem lippenförmige Dichtstreifen befestigt sind, wird im aufgeblasenen Zustand durch Stützelemente in einem Abstand von der Fahrbahn entfernt gehalten, um ein Umlegen der Dichtstreifen bei einer Einfederung des Fahrzeugs zu verhindern.

Die in der ersten genannten Patentschrift beschriebene Vorrichtung ist eher für den Dauerbetrieb besonderer, als zur Notbremsung normaler Fahrzeuge geeignet, weil zum Absaugen der großen Luftmengen und leckluftetröme große Ventilatoren erforderlich sind, die relativ lange Anlaufzeiten und viel Platz benötigen.

Die in der zweiten genannten Patentschrift beschriebene Vorrichtung hat insbes. den Vorteil, dass eine unter dem Fahrzeug gebildete Unterdruckkammer mit einem aufblasbaren, elastischen Ringkissen besser abgrenzbar ist, als durch eine starre Randbegrenzung. Denn ein elastisches Ringkissen kann natürlich Fahrbahnune benheiten so wie unterechiedliche und veränderliche Bodenfreiheiten, die auch lastbedingt auftreten, gut kompensieren bzw. ausgleichen.

Nachteile bei den genannten u.a. bekannten Vorrichtungen dieser Art sind, dass sie relativ große Unterdruckkammern aufweisen, die viel Platz brauchen und aus denen im Notfall schnell große Luftmengen abgesaugt werden müssen, um möglichst kurze Bremswege erreichen zu können. Außerdem sind die Randabdichtungen von den bekannten Unterdruckkammern problematisch und oft ungenügend, weil dadurch zu viel Leckluft in die Kammern eindringt und zusätzlich mit abgesaugt werden muss. Demzufolge sind auch besonders leistungsfähige und relativ große, schwere und teure Zusatzgeräte wie z.B. Vakuumerzeuger (Vakuumpumpen, Ejektoren) erforderlich. Ein weiterer Nachteil von Notbremssystemen, die das Fahrzeug belasten, ist, dass die Fahrzeuginsassen bei plötzlichen Notbremsungen erschrecken können, weil das Auto ruckartig einfedern und dabei unzulässig stark überlastet werden kann. Diese Gefahr besteht besonders dann, wenn das Fahrzeug ohnehin schon bis zum zulässigen Gesamtgewicht beladen ist.

In der deutschen Patentschrift DE-PS 22 29 442 wurde ein unmittelbar auf die Fahrbahn wirkendes Notbremssystem für Fahrzeuge, insbesondere Kraftfahrzeuge, gezeigt und beschrieben, bei dem der oben und ringsum geschlossene Saugkörper aus einer von Kanälen durchzogenen flexiblen Matte besteht, aus deren Kanalsystem Luft nach dem Aufsetzen auf die Fahrbahn z.B. mittels einer Vakuumpumpe abgesaugt wird. Die Vorteile dieses Notbremssystems liegen in der sich gut dichtend an die Fahrbahn schmiegenden flexiblen Matte, deren Luftreservoir schnell abgesaugt werden kann und die durch ihre Robustheit und Verschleißfestigkeit große Bremskräfte auf die Fahrbahn zu übertragen vermag. Die Matte, die z.B. aus Reifengummi besteht, ist flach und beansprucht im eingezogenen Zustand nur wenig Platz unter einem Fahrzeug. Ihre gute Dichtwirkung sowie die aus den Kanälen abzusaugenden geringen Luftmengen ermöglichen es, auch Baugröße, Gewicht und Kosten wesentlicher zum Notbremssystem gehörender Teile zu verringern. Deshalb kann z.B. die Vakuumpumpe sehr klein gehalten werden und trotzdem enorme Bremskräfte erzeugen, was sich bei praktischen Versuchen gezeigt hat.

Ein Nachteil der Bremsmatte ist nur, dass sie nicht bei allen schlechten Straßenverhältnissen und Witterungsbedingungen so starke Bremsverzögerungen erzeugen kann, wie beim Einsatz auf normalen, guten Straßen.

Aufgabe der vorliegenden Erfindung ist es, Wege, Lösungen und Mittel zu zeigen, wie und wodurch die bekannten und genannten Probleme bei der Notbremsung von Fahrzeugen weitgehend zusammen gelöst werden können und sollen. Insbesondere besteht die Aufgabe darin, mit einem beschriebenen, manuell und automatisch auslösbaren und steuerbaren, schnellstens einsatzbereiten Notbremssystem größere Sicherheit auch bei winterlichen Straßenverhältnissen mit einem möglichst geringen technischen und Kostenaufwand zu ermöglichen und die genannten Nachteile der bekannten Systeme zu vermeiden.

Diese Aufgabe wird durch Merkmale gelöst, die in mehreren Ansprüchen enthalten sind.

Die Vorteile der Erfindung sind zahlreich:
- Gemäß Anspruch 1 wird in einer Unterdruckkammer, die eine beliebige Form und Umrandung haben kann, ein eingebauter Luftsack gezündet, der die seinem Volumen entsprechende Luftmenge durch mindestens ein Auslaßventil aus der Kammer ausstößt. Dadurch wirkt der innen expandierende Luftsack, der während der Notbremsung aufgeblasen bleibt, wie eine Vakuumpumpe mit gewaltiger Saugleistung, die schlagartig eine große Luftmenge, die nur Ballast darstellt, aus der Unterdruckkammer verdrängt. Der gleichzeitig aktivierte
- echte Vakuumerzeuger braucht dadurch nur noch Restluft aus der Kammer abzusaugen, wodurch die Ansprechzeit des Notbremssystems wesentlich verkürzt wird. Das ermöglicht eine
- höhere Effektivität oder/und kleinere, kostengünstigere Vakuumerzeuger.

Gemäß der Weiterentwicklung der Erfindung wird derselbe Luftsack mehrfach genutzt, was große zusätzliche Vorteile bringt:
Der kissenartige, innere Luftsack ...
   - ermöglicht in Verbindung mit einer ihn schützenden flexiblen Matte, die auch als Bremsmatte dient, eine sehr wirksame Bodendichtung für die Unterdruckkammer,
   - verkleinert den Saugraum in der Unterdruckkammer während der Notbremsung ohne Verringerung der Effektivität,
   - ermöglicht mit Hilfe von Abstandhaltern, dass der flache Saugraum in der Unterdruckkammer bei Einfederungen des Fahrzeugs mitwandern kann und voll wirksam bleibt,
   - erhöht die Abwärtsbeschleunigung der Unterdruckkammer und verkürzt die Ansprechzeit des Notbremssystems,
   - kann Luftdruck durch die Matte direkt auf die Fahrbahn und dadurch Last vom Fahrzeug bzw. den Rädern auf die Bremsmatte übertragen, dadurch die Radbremsen entlasten, und die Belastung des Fahrzeugs in zulässigen Grenzen halten,
   - erlaubt durch wählbaren, variablen Kissen-Druck und -Hub günstigste Bremskraftverteilungen zwischen den Radbremsen und der Matte,
   - ermöglicht komfortable Notbremsungen, bei denen ein plötzliches, die Insassen erschreckendes Einfedern des Fahrzeugs vermieden wird,
   - begünstigt den optimalen Einsatz des Notbremssystems mit einer beschriebenen neuen und nützlichen "Ganzjahres-Matte", wodurch Kosten für eine spezielle zweite Matte sowie lästige Mattenwechselungen für sommer- und winterliche Straßenverhältnisse vermeidbar sind, und
   - ermöglicht durch eine beschriebene, speziell präparierte Matte auch eine verstärkte Notbremswirkung auf sommerlichen Fahrbahnen.

Gemäß einer weiteren Entwicklung der Erfindung ist die Matte ganz geschlossen und die Unterdruckkammer dadurch auch unten praktisch vollständig abgedichtet. Dieser ungewöhnliche Entwicklungsschritt ist mit der luftdichten Matte erreichbar, die mit Hilfe von mindestens einem aufgeblähten Luftsack großflächig so stark auf die Fahrbahn gepreßt wird, daß der äußere atmosphärische Luftdruck unten kaum eine Angriffsfläche findet, um die Matte in die evakuierte Kammer drücken zu können. Das verhindert auch der Gegendruck insbesondere vom inneren Luftsack oder ein spezielles Sicherheitsventil, falls der Innendruck relativ zu schwach sein könnte.

### Vorteile:

Die extremste Störung, die bei den bekannten Notbremssystemen auftreten kann, ist ein plötzlicher Lufteinbruch in die unten offenen Vakuumkammern, der z.B. möglich ist, wenn bei einer Notbremsung Straßenbahnschienen überquert werden. Das dabei leicht total verlorengehende Vakuum muss dann schnellstens erneuert werden. Das ist ein Problem und großer Nachteil bei bekannten Nptbremssystemen mit voluminösen Unterdruckkammern. Kein Problem ist es dagegen bei einer gezeigten und beschriebenen flachen und flach bleibenden Kammer gemäß der Erfindung.

Aber noch besser ist es natürlich, Leckluftzustrom möglichst ganz zu verhindern und das einmal erzeugte Vakuum während der ganzen Notbremsung zu erhalten, was mit dem luftdicht geschlossenen (Kammer-) System möglich ist. Dadurch sind weitere, erhebliche Vorteile erreichbar, wie:
- nochmals verkürzte Ansprechzeit zur Aktivierung des Notbremssystems,
- größere Effektivität durch noch bessere Abdichtung und stärkeres, höherprozentigeres Vakuum,
- geringere Störempfindlichkeit,
- wesentliche Reduzierung des Aufwandes und der Kosten z.B. für den Vakuumerzeuger und/oder Verstärkung der Notbremswirkung und
- geringerer Platzbedarf mit ermöglichter, sehr kompakter, flacher Baugröße insbesondere der Unterdruckkammer, die dadurch leichter unter Fahrzeugen unterzubringen ist.

Die hier gezeigten Lösungen der bekannten und beschriebenen Probleme und die damit erreichbaren zahlreichen Vorteile der Erfindung sollen dazu beitragen, dass stark wirksame Notbremssysteme zur Erhöhung der Verkehrssicherheit endlich und auch kostengünstig gebaut werden können.

Nachstehend wird die Erfindung anhand von mehreren in Zeichnungen dargestellten Ausführungsbeispielen näher erläutert. Die Merkmale der Erfindung ergeben sich aus der folgenden Beschreibung von bevorzugten Ausführungsformen der Erfindung, die nicht einschränkende Beispiele darstellen.

Es zeigt:
Fig.1 ein Fahrzeug, bei dem die Unterdruckkammer des Notbremssystems in einer flachen Mulde am Fahrzeugboden angeordnet und im eingezogenen, inaktiven Zustand dargestellt ist,
Fig.2 schematisch eine erfindungsgemäße Unterdruckkammer im abgesenkten, aktiven Zustand auf der Fahrbahn,
Fig.3 eine erfindungsgemäße Vorrichtung, wobei zusätzlich Einzelheiten zur Verstärkung der Bodenhaftung an der Ganzjahres-Bremsmatte gezeigt sind,
Fig.4 ein manuell und automatisch auslösbares und steuerbares Notbremssystem mit einer Unterdruckkammer im aktivierten Zustand, die sehr flach herstellbar und besonders für Fahrzeuge mit größerer Bodenfreiheit geeignet ist,
Fig.5 schematisch ein Sicherheitsventil für geschlossene Unterdruckkammern,
Fig.6 ein ähnlich wirkendes elektrisches Sicherheitsventil, ebenfalls in Kombination mit einem Auslassventil,
Fig.7 Einzelheiten X von Fig.3 und Y von Fig.4,
Fig.8 eine spezielle Sommermatte an der Unterdruckkammer,
Fig.9 eine erfindungsgemäße Weiterentwicklung des Notbremssystems mit einer geschlossenen, sehr flach gebauten Unterdruck-Kammer, die auch unter Fahrzeugen mit geringer Bodenfreiheit leicht Platz findet,
Fig.10 eine ähnlich flach gebaute Kammer, die durch eine spezielle Dichtungs- und Bremsmatte nahezu geschlossen ist,
Fig.11 eine Kammer, die ein spezieller Luftsack auf einer flexiblen Matte bildet,
Fig.12 schematisch die zusätzliche Anwendung des Auto-Starters, der hier durch Umkupplung auch zum Antrieb der Vakuumpumpe für das Notbremssystem dient, und
Fig.13 eine vorteilhafte praktische Ausführung zur doppelten Nutzung des Starters ohne Umkupplung.

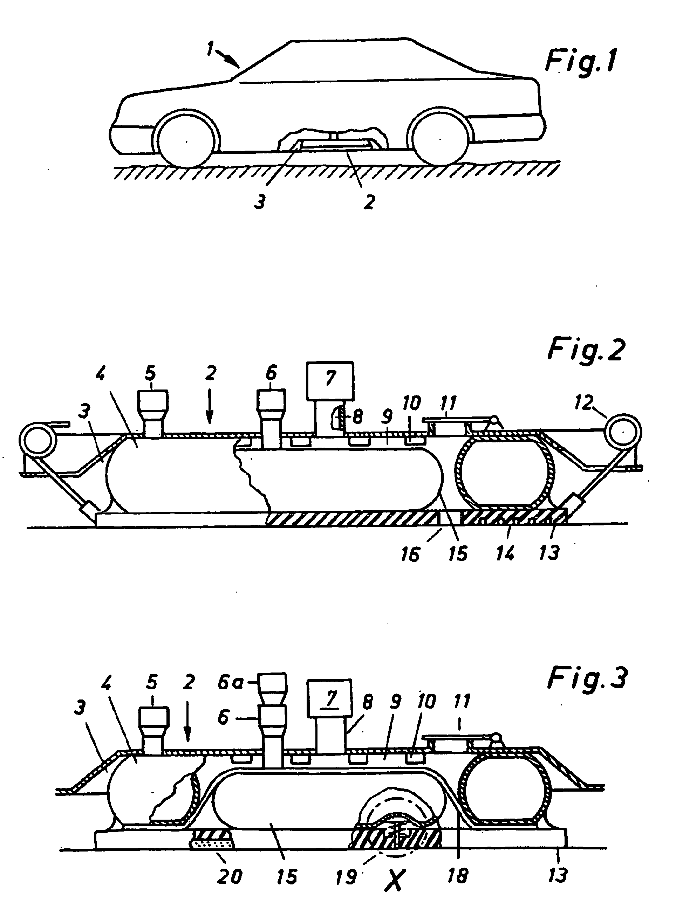

Wie die Fig.1 zeigt, ist die Unterdruckkammer 2 des Notbremssystems z.B. in einer Mulde 3 am Boden mitten unter dem Fahrzeug 1 oder nahe an seinem Schwerpunkt angeordnet, um beste Bremswirkung zu erreichen und auch die Gefahren des Schleuderns und des Ausbrechens aus Kurven herabzusetzen.

Die Fig.2 zeigt schematisch eine aktivierte Unterdruckkammer 2, die von einem aufgeblasenen Schlauch 4 gebildet und umrandet ist. Der Schlauch 4 liegt oben am Fahrzeugboden luftdicht an und ruht unten auf einer flexiblen Matte 13, die er zumindest an ihrem Umfang auf die Fahrbahn preßt. Die Matte 13, die beispielsweise aus Reifengummi bestehen kann, schützt den Schlauch 4 vor mechanischer Beschädigung und sie dient gleichzeitig als eine sehr verschleißfeste und tragfähige Randabdichtung für die Unterdruckkammer 2. In der Unterdruckkammer 2 befindet sich ein Luftsack 15, der ebenfalls im aufgeblasenen Zustand dargestellt ist und der z.B. auf derselben, ihn schützenden Matte 13 ruht. Physikalisch kann er als ein in der Unterdruckkammer 2 schwebender Gassack 15 angesehen werden. Über dem kissenartig dargestellten Luftsack 15 sind am Fahrzeugboden Abstandhalter 10 angeordnet, die dafür sorgen, dass die für das wirksame Vakuum und die Bodenhaftung maßgebende, effektive Fläche und die Größe des Saugraums 9 quasi erhalten bleiben. Denn trotz Einfederung des Fahrzeugs bleibt der mit abwärts wandernde Saugraum 9 in der Unterdruckkammer 2 nahezu konstant. (Saugraum 9 = Volumen der Unterdruckkammer 2 - Kissenvolumen 15.) Die Abstandhalter 10 können z.B. als Blöcke oder besser noch rippenartig ausgebildet und so angeordnet sein, dass sie ein strömungsgünstiges, zum Saugrohr 8 hin gerichtetes Kanalprofil bilden. Zwischen der Unterdruckkammer 2 und der freien Atmosphäre ist mindestens ein Auslassventil 11 mit großem Durchlassquerschnitt angeordnet, das sich bei unzulässigem Überdruck selbsttätig öffnet und Luft aus der Kammer 2 ins Freie abläßt.

Als ein besonders einfach wirkendes Auslassdventil 11 kann z.B. eine Gummiplatte dienen, die lose auf einer oder mehreren größeren Öffnungen der Unterdruckkammer 2 liegt, so dass die vom inneren Luftsack 15 explosionsartig verdrängte Luft möglichst ungehindert ins Freie ausstoßbar ist. Das Auslassventil 11 leitet auch schädlichen Staudruck ab, der sich beim schlagartigen Senken der Unterdruckkammer 2 in ihr bilden kann. Die Matte 13, die wie die Unterdruckkammer 2 eine Fläche mit beliebiger, geometrischer Form haben kann, hat mindestens am Rande ihrer Unterseite z.B. ein labyrinthartig ausgebildetes Dichtungsprofil 14. Unter dem Innenkissen 15 besitzt sie zumindest Einschnitte wie Rillen zur Verbesserung ihrer Flexibilität. Durch Öffnungen 16 in der Matte 13 wird Leckluft, die trotz guter Randabdichtung unter sie gelangt, mit aus der Unterdruckkammer 2 abgesaugt.

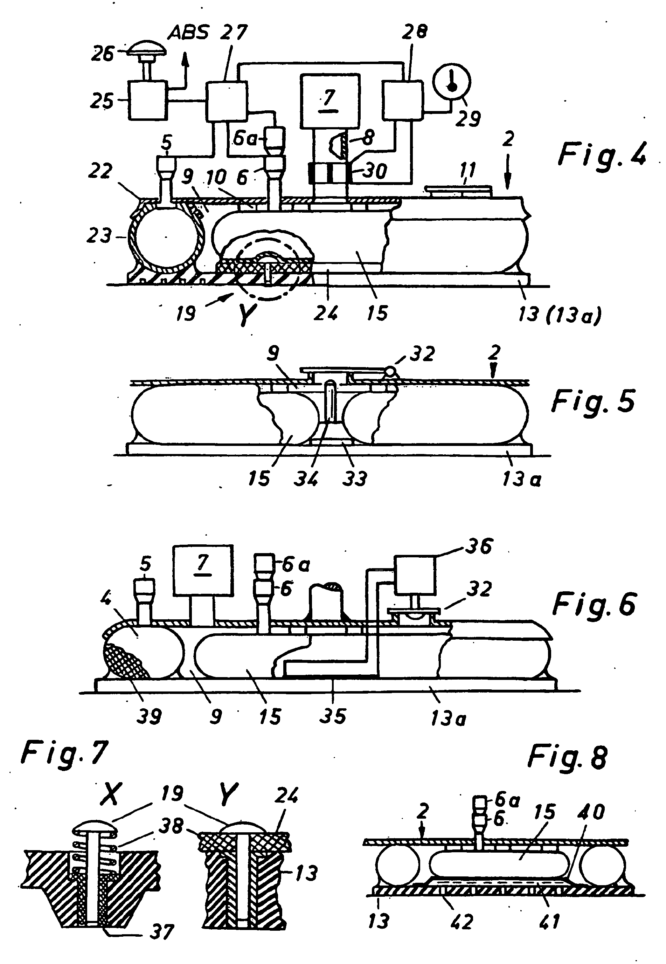

Zur Aktivierung der beiden Luftsäcke 4 und 15 sind diese mit zwei Gasgeneratoren 5 und 6 verbunden. Beide Luftsäcke unterscheiden sich von normalen Airbags zumindest dadurch, dass sie den Luftdruck während der Not bremsung beibehalten und nicht, wie für den Insassenschutz üblich, sofort wieder entweichen lassen. An den Saugraum 9 der Unterdruckkammer 2 ist ein Vakuumerzeuger 7 angeschlossen, der z.B. eine Vakuumpumpe, ein Ejektor oder auch ein Vakuumspeicher sein kann. Wie in Fig.4 gezeigt ist, kann die Auslösung des Notbremssystems manuell und auch automatisch durch einen Notmelder mit dazu geeigneten Sensoren erfolgen. Die flache Matte 13 kann bekanntlich in einen Rahmen gespannt sein und zusammen mit den leeren Luftsäkken 4 und 15 von Federn oder einer beliebigen anderen Einziehvorrichtung 12 im inaktiven Zustand unter dem Fahrzeug 1 gehalten werden, wie es die Fig.1 zeigt.

Wirkungsweise: Die bei der Notbremsung gezündeten, aktivierten Gasgeneratoren 5 und 6 blähen die beiden Luftsäcke 4 und 15 auf, die die Matte 13 auf die Fahrbahn beschleunigen und pressen, an die sie sich flexibel so gut dichtend anschmiegt, dass kaum noch Leckluft unter ihr hindurch in die Unterdruckkammer 2 gelangt. Gleichzeitig wirkt der innere, schlagartig aufgeblähte Luftsack 15 wie eine Vakuumpumpe mit gewaltiger Saugleistung, die eine unnötig große, dem Kissenvolumen 15 entsprechende Luftmenge durch das Auslassventil 11 aus der Unterdruckkammer 2 ins Freie ausstößt. Das leicht zu öffnende Ventil 11 schließt sich wieder selbsttätig, sobald die echte Vakuumpumpe 7 wirkt. Diese kann z.B. als Schnellläufer erstaunlich klein sein und trotzdem rasch ein sehr effektives Vakuum erzeugen, weil sie nur noch wenig Luft aus dem reduzierten Saugraum 9 abzusaugen braucht. Durch das erzeugte Vakuum presst der äußere, atmosphärische Luftdruck das Fahrzeug stark auf die Fahrbahn, so dass die Bodenhaftung wächst und Bremswege wesentlich verkürzt werden können. Besonders vorteilhaft ist, dass der flache, sehr effektiv wirksame Saugraum 9 klein und auch bei einfederndem Fahrzeug weitgehend konstant bleibt. Dabei kann durch das aufgeblähte Innenkissen 15 mindestens ein Teil der Last vom Fahrzeug bzw. den Rädern direkt auf die Brems- und Dichtungsmatte 13 verlagert und dadurch eine unzulässige Fahrzeug-Übetlastung vermieden werden.

In weiterer Ausgestaltung der Erfindung kann der innere Luftsack 15 mit einem Druckregler verbunden sein und durch veränderlichen Fülldruck wahlweise in der Höhe und/oder auch im Durchmesser ausdehnbar gestaltet werden. Durch eine gürtelartige Umspannung oder eine besonders feste Aussenhülle des Kissens 15 ist z.B. erreichbar, dass es seine Höhe oder Hubkraft verändert. Und durch im Kissen 15 z.B. senkrecht eingebaute Seile oder Bänder könnte sein Hub begrenzt und dafür sein Durchmesser oder Umfang variabel sein. Der dem Bedarf entsprechend steuer- oder regelbare Fülldruck ermöglicht eine optimale Bremskraftverteilung zwischen der Matte 13 und den Fahrzeugrädern sowie komfortablere Notbremsungen.

Nach der Notbremsung können z.B. (Rückzug-) Federn, die von den aktivierten Luftsäcken 4 und 15 beim Senken der Unterdruckkammer 2 gespannt wurden, die Matte 13 mit den nun luftleeren Säcken wieder in ihre Ausgangslage hochziehen. Das Gleiche könnte an Stelle von Federn auch eine schematisch dargestellte Einziehvorrichtung 12 bewerkstelligen. Da die Matte 13 selbst und auch die zusammengefalteten Luftsäcke 4 und 15 sehr flach sind, braucht das Notbremssystem, das außerdem leicht ist, nur wenig Platz unter einem Fahrzeug.

Durch Weiterentwicklung der Erfindung ist z.B. in Fig.3 gezeigt, wie mit dem bisher schon sehr nützlichen Innenkissen 15 noch zusätzliche Aufgaben erfüllt und weitere Vorteile erreicht werden können. Eine zusätzliche Aufgabe bestand darin, größere Sicherheit auf sommerlichen, wie auch auf winterlich glatten Straßen mit aktivierbaren Spikes 19 zu erreichen.

Die Fig.3 zeigt als Einzelheit die aufgeblasenen Luftsäcke 4 und 15 auf der Matte 13 und dass der Innensack 15 mit ihr verbunden bzw. an sie gefesselt ist. Diese Verbindung zwischen dem Innenkiesen 15 und der Matte 13 kann durch innen eingearbeitete oder über das Kissen 15 gespannte Bänder 18 erfolgen, die fest oder elastisch sein können. Zumindest in der Zone unter dem Kissen 15 sind in der Matte 13 zahlreiche axial bewegliche, elastisch federnde Spikes 19 angeordnet und z.B. in Kunststoffbuchsen gelagert (s. Fig.7).

Die gefederten Spikes 19, die normalerweise inaktiv sind, ragen mit ihren Köpfen oben aus der Matte 13 heraus. Die enge Verbindung zwischen der Matte 13 und dem Kissen 15 hat den Vorteil, dass die dazwischen angeordneten Spikes 19 mit definiertem Luftdruck aktivierbar sind und weitgehend unabhängig von der Bodenfreiheit eines Fahrzeugs eingreifen können. Falls der Kissenboden nicht schon verstärkt ist, sollte zwischen ihm und den Köpfen der Spikes 19 eine elastische Platte z.B. aus Kunststoff angeordnet sein, um den Kissendruck besser und gleichmäßig wirksam auf die Spikes 19 zu übertragen. Das mit dem Gasgenerator 6 normal aufgeblähte Kissen 15 bringt die Spikes 19 nicht zum Eingriff. Dazu ist mindestens eine zweite Druckstufe für winterliche Straßenverhältnisse vorgesehen, die durch einen zweiten Gasgenerator 6a schematisch dargestellt ist. In weiterer Ausgestaltung der Erfindung ist der Kissendruck so variabel, daß die Spikes 19 z.B. bei Schneeglätte mehr und bei Eisglätte weniger tief eingreifen. Das wäre mit einem intelligenten Sensor möglich, der den vorliegenden Straßenzustand erkennt und sein Stellsignal an einen damit verbundenen Druckregler für das Innenkissen 15 leitet.

Um die Bodenhaftung der Brems- und Dichtungsmatte 13 auch auf sommerlichen Straßen zusätzlich zu erhöhen, sind in ihrer Grundfläche klebstoffartige Substanzen 20 enthalten oder auf sie aufgetragen, die durch Druck und Reibung auf der Fahrbahn zur Wirkung kommen. Um eine Austrocknung der Klebsubstanz 20 zu verhindern, kann der Klebstoff zweckmäßigerweise z.B. in kleine Kugeln oder kugelförmige Hohlräume eingebettet sein, die durch Reibung der Matte 13 auf der Fahrbahn aufplatzen und den Klebstoff 20 freigeben.

Die Fig.4 zeigt ein Notbremssystem mit einer flach herstellbaren Unterdruckkammer 2 im aktivierten Zustand auf der Fahrbahn. Die Unterdruckkammer 2 kann geometrisch beliebig geformt und z.B. auch kreisförmig sein. Sie besteht aus einer an einer Kolbenstange 8 befestigten Deckplatte 22, unter der zur Randabdichtung ein aufgeblähter Luftschläuch 23 über der flexiblen Matte 13 befestigt ist. Der Schlauch 23 kann auch mindestens zum Teil mit elastischem Material wie z. B. Kunststoff (39) gefüllt sein. Das hätte den Vorteil, dass der Gasgenerator 5 eingespart werden könnte. Der Schlauchquerschnitt ähnelt hier beispielsweise dem eines Fahrzeugreifens. Die leichte und trotzdem stabile Deckplatte 22, die zweckmäßigerweise aus einer Alu-Legierung oder Kunststoff besteht, ist mindestens an ihrer Unterseite profiliert und an der axial auf- und abbeweglichen Kolbenstange 8 befestigt, die hier zugleich als Saugrohr 8 dient, das mit dem Vakuumerzeuger 7 verbunden ist. Das Profil unter der Deckplatte 22 dient nicht nur zu ihrer Versteifung, sondern auch als Abstandshalter 10 für das darunter befindliche Innenkissen 15. Außerdem bildet das Profil Rippen 10 und damit Kanäle, die strömungsgünstig vom Rande der Unterdruckkammer 2 zum Saugrohr 8 hin verlaufen. Das besagte Auslassventil 11 befindet sich hier an der Deckplatte 22. Zwischen ihr und der flexiblen Matte 13 ist der kissenförmige Luftsack 15 angeordnet. Darunter können in der Matte 13 besagte axial auf und abbeweglich Spikes 19 enthalten sein, die normalerweise inaktiv sind, weil sie von an ihren Köpfen angreifenden elastischen Mitteln, wie z.B. Federn oder Gummielementen, im eingezogenen Zustand von der Fahrbahn entfernt gehalten werden. Dazu dient hier eine elastische Platte 24, die z.B. aus Weich- oder Schaumgummi bestehen kann.

Die Matte 13, die wahlweise ohne oder mit aktivierbaren sowie regulierbaren Spikes 19 ausgerüstet sein kann, dient hierbei nicht nur als Bremsmatte und zur Randabdichtung, sondern auch zu weiteren, sehr nützlichen Zwecken:

Gemäß einer speziellen Weiterentwicklung der Erfindung ist die Matte 13 und damit auch die Unterdruckkammer 2 hierbei ganz geschlossen. Dieser überraschende Entwicklungsschritt, der ganz im Gegensatz zu den bekannten Notbremssystemen mit ihren am Boden offenen Unterdruckkammern gemacht wurde, ist durch die spezielle Matte 13a in Verbindung mit dem Innenkissen 15 möglich. Dieses preßt die geschlossene Matte 13a großflächig und so innig fest auf die Fahrbahn, dass sie sich Bodenunebenheiten bestens und dicht anpasst. Dazu ist die Matte 13a leicht und elastisch gebaut. Sie kann mindestens teilweise aus Kunststoff, Gummi oder gummiartigem Werkstoff bestehen. Ihre Grundfläche oder Sohle, in der sich mindestens Rillen zur Verbesserung ihrer Flexibilität befinden, besteht aus sehr abrieb- und verschleißfestem Material, wie z.B. Reifengummi. Um dem äußeren, atmosphärischen Luftdruck darunter keine Angriffsfläche zu bieten, hat sie dementsprechend wenig Negativprofil.

Zur Befestigung der Matte 13a im eingezogenen Zustand kann sie von Seilen oder Bändern durchzogen und in einen Rahmen der Unterdruckkammer 2 gespannt sein.

Dem Notbremssystem ist ein zentrales Steuergerät 27 zugeordnet, an das folgende Teile angeschlossen sind:
- ein Notmelder 25 mit einem Notknopf 26 zur manuellen und automatischen Auslösung der Notbremsung
- eine Anschlußleitung zu einem schon vorhandenen ABS (Antiblockiersystem), um dessen Information zur Auslösung und/ oder Steuerung des Notbremssystems verwerten zu können
- ein Glättesensor 28 zur automatischen Erkennung winterlich glatter Straßen und zur Aktivierung der Spikes 19
- ein Gasgenerator 5 für das schlauchartige Randkiseen 4 oder den Außensack 23
- ein mindestens 2-stufiger Gasgenerator, dargestellt durch 2 Gasgeneratoren 6 und 6a oder ein Druckregler für das Innenkissen 15 und den wahlweisen Spikes-Einsatz und
- der Vakuumerzeuger 7 für die Unterdruckkammer 2.

Der Glättemelder 28 (Sensor) besteht in einer besonders einfach dargestellten Ausführung z.B. aus 4 Dehnungsmessstreifen (DMS) 30, die allgemein an der Aufhängung der Unterdruckkammer 2, d.h. hier speziell an der Kolbenstange 8 um 90° rundum gegeneinander versetzt angeordnet und zu einer (Wheatstone-) Brückenschaltung miteinander verbunden sind. Außer den Dehnungsmessstreifen 30 ist an den Glättemelder 28 ein Thermometer 29 zur Messung der Außentemperatur angeschlossen.

Der Notmelder 25 kann zur automatischen Auslösung des Notbremssystems mit einem oder mehreren dazu geeigneten Sensoren verbunden sein. Außerdem ist er durch eine elektrische Leitung mit dem ABS (Antiblockiersystem) verbunden, um dadurch zu erfahren, ob es aktiv ist oder nicht. Denn wenn es arbeitet, befinden sich die Fahrzeugräder an ihrer Haftgrenze, bei der die Zuschaltung des Notbremssystems schon erwünscht sein und in Betracht kommen könnte. Besonders erfahrene Autofahrer haben ein Gespür dafür, manche Notsituationen rechtzeitig erkennen zu können. Und viele Fahrer haben sich in sehr gefährlichen Situationen schon gewünscht, ein Notbremssystem einschalten zu können. Deshalb ist zur manuellen Auslösung der Notknopf 26 am Notmelder 25 angebracht.

Wirkungsweise: Der manuell oder automatisch ausgelöste Notmelder 25 gibt sein Signal an das Steuergerät 27. Dadurch wird die Kolbenstange 8 mit der Unterdruckkammer 2 freigegeben und z.B. mittels einer vorgespannten Feder oder pneumatisch auf die Fahrbahn beschleunigt. Gleichzeitig blähen die beiden gezündeten Gasgeneratoren 5 und 6 beide Luftsäcke 23 und 15 auf, falls sie nicht schon aufgeblasen worden sind. Die Wirkungsweise entspricht dann weitgehend der schon oben beschriebenen. Der innere Luftsack 15 und die vom Steuergerät 27 aktivierte Vakuumpumpe 7 sorgen für schnellstens erzeugtes Vakuum im Saugraum 9 der Unterdruckkammer 2, so dass die Deckplatte 22 den auf ihr lastenden atmosphärischen Luftdruck durch die Kissen 15, 23 auf die darunter befindliche flexible Matte 13a überträgt, die die Unterdruckkammer 2 am Boden kraftvoll und großflächig wirksam abdichtet. Dadurch findet der atmosphärische Luftdruck kaum eine Angriffsfläche unter der Matte 13a, um gegen den Kissendruck aufwärts wirken zu können.

Die 4 an der Kolbenstange 8 gegeneinander versetzt angebrachten Dehnungsmessstreifen erkennen stärke Notbremsungen an der dementsprechenden Durchbiegung oder Auslenkung der Kolbenstange 8 bzw. an der Aufhängung, egal, in welcher Richtung - ob längs oder quer - sich das Fahrzeug bewegt. Wenn im aktivierten Zustand des Notbremssystems die Dehnungsmessstreifen 30 aber eine relativ nur schwache Auslenkung und damit zu geringe Bremswirkung dem Glättesensor 28 signalisieren und wenn dabei die vom Thermometer 29 gemessene Außentemperatur nur um oder unter 0° Celsius liegt, ist es naheliegend, dass Eis- oder Schneeglätte vorliegt. Das meldet der Glättesensor 28 dem Steuergerät 27, das daraufhin den zweiten Gasgenerator 6a aktiviert. Dieser erhöht den Druck im Innenkissen 15 so stark, dass die vorher inaktiven Spikes 19 aktiv werden und eingreifen.

Die Dehnungsmessstreifen 30 in Verbindung mit einer (Wheatstone-) Brückenschaltung und einem Thermometer 29 sind nur ein einfaches Ausführungsbeispiel für einen sogenannten Glättesensor 28, der natürlich auch andersartig funktionieren und andere Erkennungsmerkmale für winterliche Straßenglätte erfassen und signalisieren könnte.

Eine Variation in der Wirkungsweise des Notbremssystem ist z.B. dadurch möglich, dass die Kolbenstange 8 arretierbar ist und nach dem Aufsetzen der fertig aufgeblähten Unterdruckkammer 2 auf die Fahrbahn sofort blockiert, d.h. mit dem Fahrzeug fest verbunden wird. Der danach aktive Vakuumerzeuger 7 bewirkt dann, dass der atmosphärische

Druck über der Deckplatte 22 direkt auf dem Fahrzeug lastet. Die Notbremskraft kann so mindestens zum Teil von der Matte 13a auf das Fahrzeug bzw. seine Reifen verlagert werden. Offensichtlich sind zwischen loser und fester Koppelung der Kolbenstange 8 bzw. der Unterdruckkammer 2 an das Fahrzeug Variationen möglich, um das Notbremssystem wunschgemäß optimal einsetzen zu können.

Die Fig.5 zeigt als Einzelheit schematisch den Aufbau und die Wirkungsweise des Sicherheitsventil 32, das zwischen der Unterdruckkammer 2 und der freien Atmosphäre angeordnet ist. Es ist angebracht, falls der von oben auf die geschlossene Matte 13a wirkende Druck kleiner werden kann, als der von unten wirkende atmosphärische Luftdruck, der die Matte 13a bei einer extremen Störung - wie z.B. dem Überqueren von Straßenbahnschienen - in die Unterdruckkammer 2 zu pressen versucht. Das Sicherheitsventil 32 steht mit einem auf der Matte 13a angebrachten Fühler 33 in Verbindung, der ihre Bewegung kontrolliert. Der Fühler 33 ist hier ein Stößel 34, der das Ventil 32 bei einer unzulässigen Aufwärts-Bewegung bzw. -Wölbung der Matte 13a zwangsläufig öffnet, wodurch der Saugraum 9 belüftet und die Matte 13a dadurch wieder auf den Boden gepreßt wird.

Das in Fig.6 gezeigte Sicherheitsventil 32 funktioniert elektrisch im Prinzip ebenso. Hier dient z.B. mindestens ein Dehnungsmessstreifen (DMS) 35 als Fühler 33, der auf der Oberfläche der Matte 13a befestigt ist, und eine unzulässige Dehnung oder Spannung beim Aufbauchen der Matte 13a nach oben an das angeschlossene Magnetventil 36 meldet, um das Sicherheitsventil 32 zu öffnen. Es belüftet den Saugraum 9 dann auch nur, bis der Druck über der Matte 13a wieder größer als der von unten wirkende Luftdruck geworden und die Dichtungsfunktion der Matte 13a am Boden wiederhergestellt ist. Dazu genügt oft schon eine relativ schwache Belüftung des kleinen Saugraums 9, wodurch nur wenig Vakuum verlorengeht und die Störempfindlichkeit des Notbremssystems deutlich herabgesetzt ist. Das Sicherheitsventil. 32 ist auch hier (wie in Fig.5) als kombiniertes Ventil gezeigt: Es wirkt als Auslassventil 11, indem sich die lose Ventilplatte beim Aufblasen des Innenkissens 15 selbsttätig von ihrem Sitz abhebt und am Ventilschaft hochgleitet. Und als Sicherheitsventil 32 funktioniert es, wenn der Schaft des Magnetventils 36 die Ventilplatte zwangsläufig vom Sitz abhebt.

Die Ergänzung oder Erneuerung des Vakuums im relativ kleinen Saugraum 9 der Unterdruckkammer 2 ist im Fall einer Störung viel schneller und ökonomischer möglich, als die erneute Evakuierung von bekannten, voluminösen, unten offenen Kammersystemen. Auch hierdurch zeigt sich die größere Effizienz des vorgestellten Notbremssystems.

In Fig.7 sind die Einzelheiten X von Fig.3 und Y von Fig.4 als Ausführungsbeispiele für aktivierbare Spikes 19 deutlicher gezeigt, die auf Wunsch eingesetzt werden können. In der flexiblen Matte 13 und 13a sind Buchsen 37 als Lager für die Spikes 19 befestigt, die mittels Federn 38 oder anderen Federmitteln, wie z.B. einer elastischen Platte 24, normalerweise inaktiv gehalten werden und nur bei Bedarf eingreifen können.

Die Fig.8 zeigt die Unterdruckkammer 2, an der die Matte 13 oder 13a als spezielle Sommermatte ausgebildet ist.

Diese besondere Matte 13 ist z.B. für Fahrzeuge gedacht, die insbesondere in klimatisch warmen Ländern oder im Sommer gefahren werden. Deshalb ist an dieser Matte, an Stelle der hierbei unnötigen Spikes 19, ein anderes Hilfsmittel vorgesehen, das in extremen Notfällen noch zusätzlich eingesetzt werden kann und helfen soll:

In der Unterdruckkammer 2 ist zwischen dem kissenartigen Luftsack 15 und der Matte 13 oder 13a ein elastisch verformbarer Behälter z.B. in Form eines gummiartigen Kissens 40 auf der Bremsmatte 13 befestigt. Das Kissen 40 enthält ein spezielles Bremsmittel 41 in Form einer Paste oder Flüssigkeit mit einer nach Freisetzung klebotoffartig wirkenden Substanz. Im Kissen 40, das auch ohne Boden gestaltet und an seinem Rand auf die Matte 13 geklebt oder aufvulkanisiert sein kann, befinden sich zumindest Löcher, die über den in der Matte 13 befindlichen, hierbei spikesfreien Bohrungen 42 angeordnet sind. Um das Bremsmittel 41 in der gewünschten Konsistenz dauerhaft z.B. flüssig zu erhalten und vor unzulässiger Verdickung zu bewahren, kann eine Schutzfolie am Kissen 40 oder an der Matte 13 angebracht sein. Diese Schutzfolie, die wie eine Dichtung und Sollbruchstelle zugleich wirkt, ermöglicht, dass das Bremsmittel 41 nur bei definiert höherem Kissendruck unter die Matte 13 gepresst und aktiv wird, um den Reibungskoeffizienten zwischen der Bremsmatte 13 und der Fahrbahn zu erhöhen und die Bremswirkung zusätzlich verstärken zu können.

Den höheren Kissendruck kann auch hier derselbe Gasgenerator 6a erzeugen, der oben zur Spikesaktivierung dient. Wegen möglichen Wartungsproblemen sollte aber statt der Schutzfolie am Kissen 40 besser zumindest ein Überdruckventil angebracht sein, das wiederholt und andauernd nutzbar ist, und wodurch das Bremsmittel 41 vom Luftsack 15 unter die Matte 13, 13a pressber ist. Durch ein am kissenartigen Behälter 40 angebrachtes Einlassventil, das z.B. über einem (Spikes-) Loch sitzen sollte, ist es möglich, Bremsmittel 41 von unten durch die Matte 13 leicht und bequem nachzufüllen oder zu erneuern.

Um die Unterdruckkammer 2 weiterhin extrem flach bauen zu können, kann das Bremsmittel-Reservoir oder -Kissen 40 auch platzsparend in eine Vertiefung oder Mulde an der Oberfläche der Matte 13 eingebettet sein. Das Bremsmittel 41 könnte z.B. auch in einem in die Mulde eingesetzten Schwamm gespeichert sein, aus dem es bei Bedarf vom darüber befindlichen Luftsack 15 unter die Bremsmatte 13 gepresst wird. Das Bremsmittel 41 ist auch in fester Form anwendbar, indem z.B. an Stelle von Spikes 19, Klebestifte in Bohrungen oder Löcher 42 der Matte 13, 13a eingesetzt werden. Diese Klebestifte wären ebenfalls günstig in Abhängigkeit vom Druck im kissenartigen Luftsack 15 automatisch einstell- und nachführbar.

Vorteile dieses wahlweise zusätzlich einsetzbaren, speziellen Bremsmittels 41 sind:
- Es kann in extremen Notfällen Bremswege noch stärker verkürzen und dadurch die Sicherheit zusätzlich vergrößern, und
- es benötigt nur wenig Platz.
- Es verursacht nur geringe Mehrkosten, weil fast alle zur Aktivierung nötigen Mittel und Teile in und an der Unterdruckkammer 2, mitsamt der Bremsmatte 13, ohnehin schon vorhanden sind.
- Vorteilhaft ist auch, dass der kissenförmige Behälter 40 bei Bedarf relativ viel Bremsmittel 41 fassen kann, und
- dass er von unten leicht wieder ausfüllbar ist.

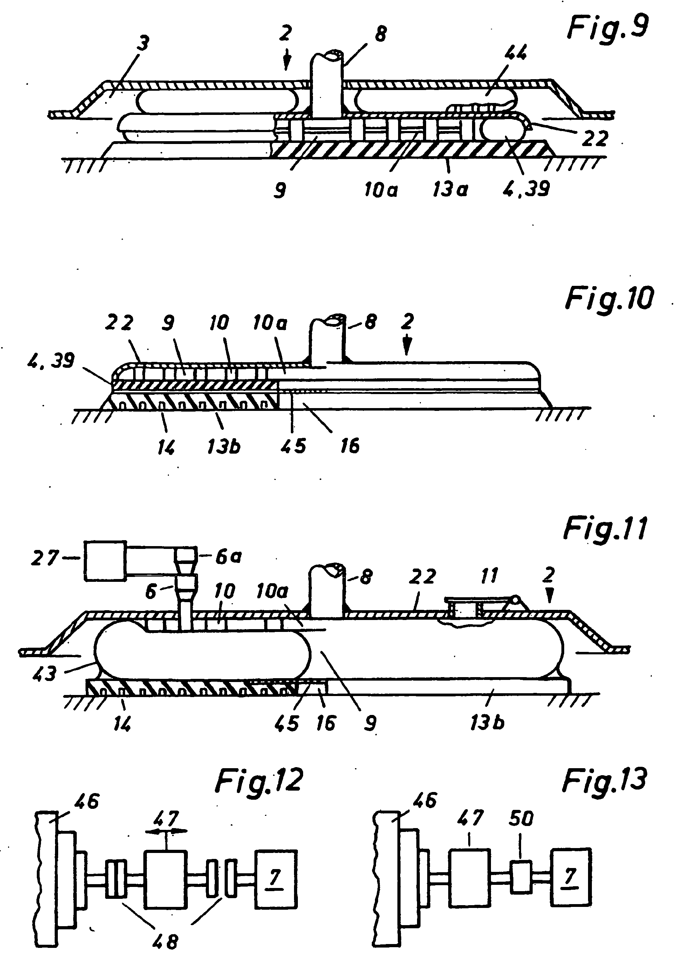

Die Fig.9 zeigt eine erfindungsgemäße Weiterentwicklung mit einer sehr flach gebauten Unterdruck-Kammer 2. Der flache Saugraum 9 in der Kammer 2 ist direkt auf der geschlossenen, schon beschriebenen flexiblen Bremsmatte 13a angeordnet. An ihrem Umfang befindet sich auch hier eine elastische Randdichtung 4 oder 39. Darüber ist der Kammerdeckel 22 z.B. an einem zentralen, senk- und einziehbaren Trag- und Saugrohr 8 befestigt. Zwischen dem Deckel 22 und dem Unterboden 3 des Fahrzeugs 1 befindet sich ein aufblasbarer Luftsack 44, der zur Erfüllung mehrerer Aufgaben dient. Der Deckel 22 ist zweckmäßigerweise elastisch federnd, membran- oder auch kolbenartig senkbar gestaltet, um den atmosphärischen Druck und den Druck vom Luftsack 44 gleichmäßig auf die Bremsmatte 13a übertragen zu können. Beim kombinierten Einsatz des Luftsacks 44 in Verbindung mit der Kammer 2 kann eine flexible Dichtungsmatte den Deckel 22 ersetzen.

Dazu enthält der Saugraum 9 z.B. an Stelle von Abstandhaltern 10 eine flexible Stützmatte 10a zwischen dem Deckel 22 und der Matte 13a. Die Stützmatte 10a weist eine hohe Druckfestigkeit auf, um die Kammer 2 vor den zwischen der Deckplatte 22 und der Bremsmatte 13a auftretenden Druckkräften zu schützen und den Saugraum 9 nahezu konstant zu erhalten. Die Stützmatte 10a kann wegen angestrebter Leichtbauweise z.B. aus Kunststoff bestehen. Sie hat zur gleichmäßigen Kraftübertragung zahlreiche Stützpunkte 10 oder Rippen und kann wie die Abstandhalter 10a auch dazu benutzt werden, den Deckel 22 mit der Matte 13a zu verbinden. Durch eine Verschraubung oder andere Verbindung der Matte 13a mit dem flexiblen Deckel 22 wäre z.B. eine leichte Austauschbarkeit der Bremsmatte 13 möglich und vorteilhaft. Unter dem Deckel 22 oder auf der Oberfläche der Bremsmatte 13a angeordnete Nocken oder Nasen können die Stützmatte 10a auch ersetzen.

In dieselbe können natürlich ebenso wie in die beschriebene (Ganzjahres-) Matte federnd eingebaute, regulierbarer Spikes 19 eingesetzt sein, die z,B. durch Druckerhöhung im Luftsack 44 aktivierbar sind.

Wirkungsweise: Zum besseren Verständnis ist in Fig.9 gezeigt, dass zwischen dem Luftsack 44 und dem Deckel 22 der Unterdruckkammer 2 einige (unnötige) Abstandhalter 10 eingezeichnet sind. Sie verdeutlichen nur, dass hauptsächlich der atmosphärische Luftdruck und nicht der Luftsack 44 den elastischen Deckel 22 auf die Kammer 2 drückt. Dieser vom Vakuum erzeugte Druck wird durch die Stützmatte 10a oder andere Abstandhalter gleichmäßig auf die geschlossene Bremsmatte 13a übertragen, die dadurch innig fest dichtend auf die Fahrbahn gepresst wird und die Bremskraft erzeugt. Dieser großflächige Bodendruck verhindert weitgehend, dass der atmosphärische Luftdruck Angriffsflächen unter der Bremsmatte 13a findet, um sie zu entlasten. Das verhindert der auf dem Deckel 22 lastende atmosphärische Druck selbst, der jedenfalls mit größerer Kraft abwärts wirkt, als eine entgegengerichtete Störkraft aufwärts wirken könnte. Außerdem hilft auch der Druck im aufgeblähten Luftsack 44 mit, die Bremsmatte 13a gegen Störkräfte ständig abwärts zu pressen. Das gilt auch im extremsten vorstellbaren Störfall, bei dem das Fahrzeug 1 z.B. sprungartig vom Boden abheben würde, so dass momentan etwa gleichgroße atmosphärische Druckkräfte von oben auf den Kammerdeckel 22 und von unten auf die Bremsmatte 13a einwirken könnten.

Auch eine Störung beim Überqueren von Straßenbahnschienen ist hierbei unproblematisch, weil über Schienenrinnen ebenfalls kein Vakuum verlorengeht, sondern lediglich die Aufstandsfläche und damit die Bremswirkung der Matte 13a momentan reduziert werden könnte.

Bei allen bekannten Notbremssystemen mit unten offenen Unterdruckkammern muss dagegen in solchen Störfällen das dabei verlorengegangene Vakuum ganz oder mindestens z.T. wieder erneuert werden. Das neue Notbremssystem mit der geschlossenen Matte 13a kann dagegen nach derartigen Störungen ohne Vakuum- und Zeit-Verlust sofort wieder kraftvoll wirken.

Bei einer 100 %-igen Aufstandsfläche der Bremsmatte 13a, die auf guten Fahrbahnen möglich ist, wäre auch die vom Vakuum erzeugte Bremskraft 100%-ig. Sie ergibt sich aus P = p · F, wobei p in kp/cm² der Druck ist, der durch das Vakuum auf dem Deckel 22 der Unterdruckkammer 2 lastet und F in cm² die effektive Oberfläche des Deckels 22 ist.

Bei einer Größe der Kammer 2 etwa vom Durchmesser eines Reserverads sind bereits gewaltige zusätzliche Bremskräfte und dadurch enorme Bremswegverkürzungen zur Erhöhung der Sicherheit möglich.

Hierbei muss jedoch größter Wert auf eine optimal gestaltete und aus bestens geeignetem Material bestehende Bremsmatte 13a gelegt werden:

Sie muß flexibel anschmiegsam sein und am Boden als gute, anpassungsfähige Dichtung fungieren. Außerdem soll sie sehr trag- und belastungsfähig sein, eine hohe Abrieb- und Verschleißfestigkeit an ihrer Grundfläche (Sohle) aufweisen und hohe Zerreissfestigkeit besitzen, um starke Bremskräfte übertragen zu können.

Vorteile der Ausführung gemäß Fig.9 liegen in:
der möglichen sehr flachen Bauform, die auch und besonders für Fahrzeuge mit geringer Bodenfreiheit geeignet ist. Der Saugraum 9 über der Matte 13a ist hierbei von vornherein sehr flach, weil ein großes Volumen nichts nützt und Nachteile hat, die gemäß Anspruch 1 von DE 102008019661 (Zwischenliteratur) in großen Unterdruckkammern vermieden werden,
der schnellen Evakuierbarkeit des relativ kleinen Saugraums 9 und
der Einfachheit, Robustheit sowie in der großen Tragfähigkeit und Verechleißfestigkeit der Bremsmatte 13a.

Weitere Vorteile sind :
die oben beschriebene Unempfindlichkeit selbst bei extremen Störungen,
das erreichbare, wesentlich wirksamere, weil höherprozentigere Vakuum im Vergleich zur den bekannten unten offenen Kammersystemen und
die leichte Speicherbarkeit des Vakuums, das in Notfällen unverzüglich nutzbar ist.

Demzufolge können wegen größerer Effektivität und geringerem Platzbedarf wichtige Bau- und Zubehörteile sowie auch die Vakuumpumpe wesentlich kompakter, kleiner, leichter und kostengünstiger gebaut werden.

Große Effektivität zeigt sich z.B. auch in der Mehrfachnutzung des Luftsacks 44 in Fig.9
Außer der geschilderten Aufgabe, Störkräfte zu unterdrükkein, bringt der Luftsack 44 noch weitere Vorteile: Er verkürzt die Ansprechzeit durch Erhöhung der AbwärtsBeschleunigung und -Geschwindigkeit beim Einsatz des Notbremssystems,
hilft, die Bremsmatte 13a gleichmäßig sowie großflächig auf die Fahrbahn zu pressen, dadurch gegen Atmosphärendruck abzudichten und
ist durch Druckerhöhung zur Aktivierung der Spikes 19 nützlich, die in einer gezeigten Ganzjahres-Matte 13 (13a) oder in die Stützmatte 10a passiv, aber aktivierbar eingebaut sein können und
könnte ferner sogar dazu benutzt werden, das Fahrzeug entsprechend einem bekannten Vorschlag zu entlasten und mindestens z.T. anzuheben.

Vorteilhaft ist auch, dass der Luftsack 44 im zusammengefalteten Zustand wenig Platz benötigt und wiederverwendbar ist, da er im vorliegenden Anwendungsfall keinem Verschleiß unterliegt.

Die in Fig.10 gezeigte Unterdruckkammer 2 unterscheidet sich auch deutlich von bisher bekannten Kammern. Den Boden der Kammer 2 bildet eine nahezu geschlossene flexible Matte 13b, die gleichzeitig als großflächige Dichtung und zur Bremskraftübertragung dient. Zur Verbesserung ihrer Flexibilität und Dichtwirkurig besitzt sie an ihrer Grundfäche ein labyrinthartiges Profil 14. Durch mindestens eine (zentrale) Öffnung 16 in der Matte 13b wird unerwünschte Luft, die trotz guter Abdichtung darunter sein kann, in und durch die Kammer 2 abgesaugt. Dadurch wird verhindert, dass Luft, die die Dichtungsmatte 13b nicht verdrängt, Gegendruck erzeugen kann. Ein auf der Matte 13b angebrachtes Siebgitter 45 oder Netz erhöht insbesondere ihre Strapazier- und Zugfestigkeit und verhindert außerdem als Grobfilter Verschmutzungen des Saugraums 9. Die Dichtung 4, 39 auf der Matte 13b hat bei dieser Flachbauweise die Form einer elastisch federnden Platte oder Scheibe, die z. B. aus Weichgummi oder ähnlichem Werkstoff bestehen kann. Auch ein flacher aufblasbarer Luftschlauch 4 ist dazu geeignet. Über dieser Dichtung 4, 39 ist der Deckel 22 befestigt, der mindestens an seiner Unterseite Rippenprofile 10a zur Versteifung hat und Abstandhalter 10 besitzt, die den Saugraum 9 der Kammer 2 bis zum Deckelrand ausdehnen. Das am Deckel 22 zentral angeordnete Saugrohr 8 kann zugleich der Kolben eines Pneumatik-Zylinders zum Senken und Einziehen der Kammer 2 sein.

Vorteil: Im Vergleich zu bekannten Unterdruckkammern, die oft nur schmale Randdichtungen wie Dichtungslippen aufweisen, ist hier praktisch die gesamte Bremsmatte 13b eine einzige, sehr effektiv anpassungsfähige und verschleißfeste Dichtung, die außerdem bei Notbremsungen vom in der Kammer 2 erzeugten Vakuum fest auf den Boden gepresst wird. In Anwendungsfällen, bei denen die Kammer 2 das ganze Fahrzeug oder Teile davon stärker auf die Fahrbahn saugen soll, empfiehlt sich als Dichtung die Anwendung eines erwähnten Luftschlauches 4. Damit sind veränderliche Bodenfreiheiten beim Einfedern des Fahrzeugs leichter kompensierbar.

Die Fig.11 zeigt im Halbschnitt eine besonders einfach gebaute und kostengünstig herstellbare Kammer 2 im aktivierten Zustand. Hierbei wird der Fahrzeugboden als KammerDeckel 22 genutzt. Darunter befindet sich auf der Fahrbahn eine flexible Matte 13b, die als Dichtungs- und Bremsmatte ausbebildet ist und dient. Sie hat mindestens eine zentrale Öffnung 16, über der ein Gitter 45, Sieb oder Ptetzgevoebe als Grobfilter vor dem Saugraum 9'angeordnet ist. Es kanne beispielsweise aus Draht, Stahlband oder Kunstfasergewebe bestehen und in die Matte 13b zur Verstärkung ihrer Festigkeit integriert werden oder auch austauschbar sein. Um die Öffnung 16 ist zwischen der Matte 13b und dem Fahrzeugboden oder Deckel 22 ein spezieller, besonders nützlicher, aufblasbarer, ringförmiger Luftsack 43 angeordnet, der hier beispielsweise ein Ringkissen ist, der aber auch eine beliebige, der Matte 13b angepasste Form haben kann. Im oder am Luftsack 43 ist in einer Mulde der Saugraum 9 ausgebildet, der durch Abstandhalter 10, eine Stützmatte 10a oder auch durch in den Luftsack 43 eingearbeitete oder ihn umspannende Bänder sowie Gurte geformt werden kann, die wahlweise fest, aber auch elastisch sein können. Der quasi in den Luftsack 43 integrierte oder vorgeformte Saugraum 9 bietet den Vorteil, dass die Kammer 2 im inaktiven, eingezogenen Zustand noch flacher werden kann, weil starre Abstandhalter 1-0,10a wegfallen können. Ein am Saugraum 9 angeordnetes Auslassventil 11 kann auch hierbei dazu dienen, Überdruck aus der Kammer 2 entweichen zu lassen, der beim schlagartigen Senken durch die Expansion des Luftsacks 43 auftreten kann. Zwei Gasgeneratoren 6 und 6a oder auch ein Druckregler für den Luftsack 43 können in verbindung mit einem zentralen Steuergerät 27 dafür sorgen, dass der Luftdruck im Kissen 43 dem Bedarf entsprechend wählbar ist. Dadurch kann hierbei die Notbremskraft wahlweise auf das Fahrzeug bzw, seine Reifen, die Bremsmatte 13b oder auf beide beliebig verteilt werden.

Die in Fig.10 gezeigte Kammer 2, die keinen Luftsack benötigt, ist insbesondere für Anwendungsfälle geeignet, bei denen die Notbremskraft nur auf die Bremsmatte 13b wirken soll. Die bevorzugt zentral angeordnete Öffnung 16 in der Matte 13b ermöglicht eine extrem breite und gute RandabDichtung. Physikalisch kann die Matte 13b quasi wie eine (fast) geschlossene Matte angesehen werden, unter der lediglich von ihr nicht verdrängte Luft abgesaugt wird, um ihr die Kraft zu nehmen, Gegendruck erzeugen zu können.

Vorteile: Die in Fig.11 gezeigte Unterdruck-Kammer 2 erfüllt hier mit einem einzigen, universell nützlichen Luftsacks 43 (Unibag) praktisch alle wichtigen, bei der Entwicklung gestellten Aufgaben:
- Sie erhöht ihre Abwärtsbeschleunigung bei der Auslösung des Notbremssystems durch die Expansion des Luftsacks selbst, und verkürzt Dadurch die Ansprechzeit.
- Sie wirkt als Rand- und Deckeldichtung und außerdem so, wie der früher beschriebene Luftsack 15 zur Verdrängung von Ballastluft gemäß Anspruch 1
- Sie überträgt die erzeugte Notbremskraft vom Autoboden oder Kammerdeckel 22 großflächig wirksam auf die Dichtungs- und Bremsmatte 13b,
- erhöht dadurch gleichzeitig den Dichtungsdruck zur Vermeidung von Leckluft, und
- ermöglicht durch gleichmäßige Lastverteilung und Flächenpressung geringen Verschleiß und eine längere Lebensdauer der Dichtungs- und Bremsmatte 13b.
- Vorteilhaft ist auch die Möglichkeit, die Notbremskraft auf die Matte 13b und das Fahrzeug beliebig verteilen zu könnten
- Außerdem kann die Unterdruckkammer 2 sogar dazu benutzt werden, das Fahrzeug entsprechend einem bekannten Vorschlag zu entlasten und mindestens zum Teil anzuheben.

Die Fig.12 zeigt schematisch, dass der Starter 47 des Fahrzeugmotors 46 durch Kupplungen 48 entweder auf der linken Seite mit dem Automotor 46 gekuppelt ist oder notfalls rechts an die Vakuumpumpe 7 des Notbremssystems umgekuppelt wird.

Die Fig.13 zeigt eine sehr einfache und nützliche Ausführung der Umkupplung. Hierbei ist zwischen dem normalerweise fest am Automotor 46 angebauten Starter 47 und der Vakuumpumpe 7 z.B. ein (Rollen-) Freilauf 5C angeordnet. Der Startermotor 47 ist dabei einfach elektrisch in seiner Drehrichtung umschaltbar, so dass er z.B. bei Rechtslauf den Automotor 46 startet und bei Linkslauf nur die Vakuumpumpe 7 des Notbremssystems antreibt.

Diese Ausführung ist ohne großen konstruktiven Aufwand überraschend einfach und kostengünstig zu verwirklichen. Dadurch wird der Starter 47 nicht nur als solcher, sondern außerdem bei Bedarf wie in Notfällen zum Antrieb der Vakuumpumpe 7 genutzt. Die doppelte Nutzung des Starters 47 hat den Vorteil, dass die Vakuumpumpe 7 keinen eigenen Antriebsmotor braucht. Das ermöglicht weitere Einsparungen an Kosten, Material, Gewicht und Platz. Auch diese mit der vorliegenden Patentanmeldung erreichbaren Vorteile sollen dazu beitragen, gute Notbremssysteme kostengünstig herstellen und damit die aktive Sicherheit erhöhen zu können.

## Patentansprüche

1. Notbremssystem für Fahrzeuge, insbes. Kraftfahrzeuge, mit mindestens einer unter dem Fahrzeug gebildeten oder vorhandenen Kammer (2) und einer Saugvorrichtung (7), die mit der Kammer (2) verbunden ist, um Luft daraus abzusaugen und so die Bodenhaftung des Fahrzeugs (1) zu vergrößern, **dadurch gekennzeichnet, dass** in die Kammer (2) mindestens ein aufblasbarer Luftsack (15) eingebaut ist, und dass an der Kammer (2) mindestens ein Auslassventil (11) angeordnet ist, durch das die vom aktivierten Luftsack (15) verdrängte Luft aus der Kammer (2) ins Freie ausstoßbar ist.

2. Notbremssystem nach Anspruch 1, bei dem die genannte Kammer (2) **dadurch gekennzeichnet ist, dass** sie
- von einem schlauchartig aufblasbaren, äußeren Luftsack (4) gebildet und umrahmt wird,
- mindestens einen genannten inneren Luftsack (15) enthält, und dass
- unter den besagten Luftsäcken (4, 15) mindestens eine flexible Matte (13) angeordnet ist, die zum Schutz der Luftsäcke (4, 15), mindestens zur Randabdichtung der Kammer (2) und als Bremsmatte (13) dient.

3. Notbremssystem nach Anspruch 1 und 2, **dadurch gekennzeichnet, dass** zumindest der innere Luftsack (15) mit veränderlichem Fülldruck wahlweise in der Höhe und/oder auch im Durchmesser ausdehnbar gestaltet ist, wobei der Fülldruck dem Bedarf entsprechend steuer- oder regulierbar ist.

4. Notbremssytem nach Anspruch 2, **dadurch gekennzeichnet, dass**
- in die flexible Matte (13) axial bewegliche und elastisch federnde, aber normalerweise inaktive Spikes (19) eingebaut sind,
- mindestens der innere Luftsack (15) über den Spikesköpfen angeordnet ist, um die inaktiven Spikes (19) bei Bedarf in Abhängigkeit vom Luftdruck im Luftsack (15) unterschiedlich weit aus der Matte (13) zum Eingreifen zu drücken, und
- die Matte (13) zumindest in ihrer Grundfläche oder Sohle integrierte oder auf sie aufgetragene, klebstoffartige Substanzen (20) aufweist, die durch Druck und Reibung auf der Fahrbahn zur Wirkung kommen, um die Bodenhaftung bei Notbremsungen zu verstärken.

5. Notbremssystem nach Anspruch 4, **dadurch gekennzeichnet, dass** ein eingebauter Glättemelder (28) in wahlweiser Verbindung mit einem Thermometer (29) zur Kontrolle der Bodenhaftung mit der Druckluftzuführung (6, 6a) oder einem Druckregler für mindestens das über den Spikes (19) angeordnete Innenkissen (15) verbunden ist, um bei Bedarf den Druck auf die.Spikes (19) so zu ver-155 stärken, dass sie zumindest bei Eis- und Schneeglätte eingreifen.

6. Notbremssystem für Fahrzeuge, insbes. Kraftfahrzeuge, mit mindestens einer unter dem Fahrzeug gebildeten oder vorhandenen Kammer (2) und einer Saugvorrichtung (7), die mit der Kammer (2) verbunden ist, um Luft daraus abzusaugen und so die Bodenhaftung des Fahrzeugs (1) zu vergrößern,
**dadurch gekennzeichnet, dass**
- die oben und am Umfang geschlossene Kammer (2) einen geschlossenen Boden hat,
ihn eine flexible Matte (13a) bildet und abdichtet,
- in die Kammer (2) über der Matte (13a) mindestens ein aufblasbarer Luftsack (15) eingebaut ist,
- zwischen der Kammer (2) und der freien Atmosphäre mindestens ein Auslassventil (11) für aus der Kammer (2) verdrängte Luft, und
- ein Sicherheitsventil (32) gegen Störfälle eingebaut ist.

7. Notbremssystem nach Anspruch 6, **dadurch gekennzeichnet, dass** die flexible Matte (13, 13a)
- mindestens zum Teil aus Kunststoff oder gummiartigem Werkstoff besteht,
- an ihrem Umfang und zumindest am Rand ihrer Unterseite ein labyrinth- oder lamellenartig ausgebildetes Dichtungsprofil (14) aufweist,
- insbesondere in ihrer mittleren Zone unter dem Innenkissen (15) Einschnitte wie Rillen zu Verbesserung ihrer Flexibilität besitzt, und
- eine Sohle aus abrieb- und verschleißfestem Material wie Reifengummi aufweist.

8. Notbremssystem nach Anspruch 2 und 6, **dadurch gekennzeichnet, dass** in besagter Kammer (2) Abstandhalter (10) für den Luftsack (15) in Form von Blöcken und/oder Rippen vorhanden und strömungsgünstig zur Absaugöffnung im Saugrohr (8) hin ausgerichtet sind, um den Saugraum (9) trotz aufgeblähtem Luftsack (15) und stark einfederndem Fahrzeug frei zu erhalten.

9. Notbremssystem nach Anspruch 6, **dadurch gekennzeichnet, dass** das Sicherheitsventil (32) mit einem Fühlermittel (33, 34, 35) auf der Matte (13a) in Verbindung steht, um das Ventil (32) bei unzulässigem Aufbauchen der Matte (13a) im Störfall zu öffnen.

10. Notbremssystem nach Anspruch 1 und 6 oder nach den vorherigen Ansprüchen
**dadurch gekennzeichnet, dass** ihm ein zentrales Steuergerät (27) zugeordnet ist, an das folgende Teile angeschlossen sind:
- ein Notmelder (25) mit einem Notknopf (26) zur manuellen und automatischen Auslösung der Notbremsung,
- eine Anschlussleitung zu einem schon vorhandenen Antiblockiersystem, um dessen Information zur Auslösung und/oder Steuerung des Notbremssystem verwerten zu können,
- ein Glättesensor (28) zur automatischen Erkennung winterlich glatter Straßen und zur Aktivierung der Spikes (19),
- ein Gasgenerator (5) für das schlauchartige Randkissen oder den Außensack (23),
- ein mindestens 2-stufiger Gasgenerator (6, 6a) oder ein Druckregler für das Innenkissen (15) und den wahlweisen Spikes-Einsatz und
- der Vakuumerzeuger (7) für die Unterdruckkammer (2).

11. Notbremssystem nach Anspruch 2 und 6, wobei die besagte Matte (13, 13a) speziell als Sommermatte ausgebildet und **dadurch gekennzeichnet ist,**
**dass** in besagter Unterdruckkammer (2) zwischen dem Luftsack (15) und der Matte (13, 13a) mindestens ein elastisch verformbarer, kissenartiger Behälter (40) angeordnet ist, der ein Bremsmittel (41) in Form einer Paste oder FlUseigkeit mit einer nach Freisetzung klebstoffartig wirkenden Substanz enthält, und dass das Kissen (40) Öffnungen aufweist, die über in der Matte (13, 13a) befindlichen Löchern (42) angeordnet sind, wodurch besagtes Bremsmittel (41) bei verstärktem Druck im Luftsack (15) unter die Matte pressbar ist, um die Bodenhaftung des Fahrzeugs zusätzlich zu erhöhen und Bremswege in extremen Notfällen noch stärker verkürzen zu können.

12. Notbremssystem für Fahrzeuge, insbes. Kraftfahrzeuge, mit mindestens einer unter dem Fahrzeug gebildete oder vorhandenen Kammer und einer Saugvorrichtung, die mit der Kammer verbunden ist, um Luft daraus abzusaugen und so die Bodenhaftung des Fahrzeugs zu vergrößern, **dadurch gekennzeichnet, dass**
- die oben und am Umfang geschlossene Kammer (2) einen geschlossenen Boden hat,
- ihn eine flexible Matte (13a) bildet und abdichtet,
- am Umfang der Matte (13a) eine flexible Randdichtung (4, 39) angebracht ist,
- über der Randdichtung (4, 39) und der Matte (13a) ein flexibler, auch kolbenartig abtauchbarer Deckel (22) befestigt ist,
- in der Kammer (2) zwischen der Matte (13a) und dem Deckel (22) Abstandhalter (10, 10a) zur Stützung der Kammer (2) angebracht sind, und
- zwischen dem Kammerdeckel (22) und dem Fahrzeugboden ein aufblasbarer Luftsack (44) angeordnet ist, um die Brems- und Dichtüngsmatte (13a) durch die Stützelemente (10, 10a) großflächig auf den Boden zu pressen.

13. Notbremssystem für Fahrzeuge, insbes. Kraftfahrzeuge, mit mindestens einer unter dem Fahrzeug gebildeten oder vorhandenen Kammer (2) und einer Saugvorrichtung (7), die mit der Kammer (2) verbunden ist, um Luft daraus abzusaugen und so die Bodenhaftung des Fahrzeugs (1) zu vergrößern,
**dadurch gekennzeichnet, dass**
- die Kammer (2) einen nahezu geschlossenen Boden hat,
- ihn eine flexible Matte (13b) bildet und abdichtet, die mindestens eine zentrale Öffnung (16) vom Boden zum Saugraum (9) der Kammer (2) aufweist,
- in oder auf der Matte (13b) ein zugfestes Siebgitter (45) oder Netz angebracht ist,
- sich mindestens auf dem Rand der Matte (13b) eine elastische Dichtung (4, 39) befindet, und
- darüber ein Deckel (22) mit Abstandhaltern (10, 10a) befestigt ist, die den Saugraum (9) der Kammer (2) bis zum Deckelrand erweitern.

14. Notbremssystem für Fahrzeuge, insbes. Kraftfahrzeuge, mit mindestens einer unter dem Fahrzeug gebildeten oder vorhandenen Kammer (2) und einer Saugvorrichtung (7), die mit der Kammer (2) verbunden ist, um Luft daraus abzusaugen und so die Bodenhaftung des Fahrzeugs (1) zu vergrößern
**dadurch gekennzeichnet, dass** die Kammer (2)
- oben durch den Fahrzeugboden oder einen Deckel (22) begrenzt ist,
- unten eine flexible Matte (13b) aufweist, die als Dichtungs- und Bremsmatte ausgeführt ist und mindestens eine zentrale hoffnung (16) hat,
- über der öffnung (16) in oder auf der Matte (13b) ein Gitter (45) besitzt, das als Grobfilter für Saugluft dient und die Mattenfestigkeit erhöhen kann,
- zwischen der Matte (13b) und dem Fahrzeugboden oder Deckel zeine aufblasbaren Luftsack (43) in Form eines Ringkissens um die Öffnung (16) herum aufweist,
- über oder im besagten Luftsack (43) am Fahrzeugboden (22) einen muldenförmig ausgebildetes Saugraum (9) besitzt, und
- ein Überdruck-Auslassventil (11) aufweist.

15. Notbremssystem für Fahrzeuge, insbes. Kraftfahrzeuge, mit mindestens einer unter dem Fahrzeug gebildeten oder vorhandenen Kammer (2) und einer Saugvorrichtung (7), die mit der Kammer (2) verbunden ist, um Luft daraus abzusaugen und so die Bodenhaftung des Fahrzeugs (1) zu vergrößern,
**dadurch gekennzeichnet, dass**
- die Saugvorrichtung eine Vakuumpumpe (7) umfasst, die vom Starter (47) des Fahrzeugmotors (46) mittels einer schaltbaren Kupplung (48) wahlweise antreibbar ist,
- als Kupplung ein Freilauf (50) zwischen dem Starter (47) und der Vakuumpumpe (7) dient, und
- der Starter (47) wahlweise in beide Drehrichtungen umschaltbar ist.

## Claims

1. Emergency braking system for vehicles, in particular motor vehicles, with at least one chamber (2) formed under the vehicle, and one suction device (7) connected to the chamber (2), to withdraw air by suction and thereby improve the road grip of the vehicle (1), **characterized by** having the following: at least one inflatable airbag (15) installed in the chamber (2) and at least one outlet valve (11) is fitted to the chamber (2) through which the air displaced by the activated airbag (15) can be discharged from the chamber into the open.

2. Emergency braking system pursuant to Claim 1, in which the chamber (2) specified is **characterized by** the following:
- It is formed and surrounded by a tubular, inflatable, external airbag (4),
- It contains at least one specified internal airbag (15)
- At least one flexible mat (13) is fitted under the specified airbags (4, 15), which serves as a protection for the airbags (4, 15), and at least as edge sealing of the chamber (2) and as a braking mat (13).

3. Emergency braking system pursuant to Claim 1 and 2, **characterized by** the following: at least the inner airbag (15) is expandable with a change in inflation pressure optional in height and/or diameter, and the inflation pressure is controllable and can be regulated according to requirements.

4. Emergency braking system pursuant to Claim 2, **characterized by** the following:
- axial and elastic spring-loaded, but normally inactive spikes (19) are fitted in the flexible mat (13)
- at least the internal airbag (15) is fitted above the spike heads in order to push the inactive spikes (19) into action at different widths from the mat (13) depending on the inflation pressure in the airbag (15) as required, and
- the mat (13) has substances (20) integrated in its surface or base or adhesive substances (20) which are coated to the surface or base which come into effect via pressure and friction on the driving surface to increase road grip in case of emergency braking.

5. Emergency braking system pursuant to Claim 4, **characterized by** the following: an integrated slippery surface alarm (28) in optional connection with a thermometer (29) to check road grip with compressed air supply (6, 6a) or to a pressure regulator for at least the internal pad (15) fitted above the spikes (19) in order to increase pressure on the spikes (19) when required to ensure they act at least in case of ice and snow surfaces.

6. Emergency braking system for vehicles, in particular motor vehicles, with at least one formed or existing chamber (2) under the vehicle and one suction device (7), connected to the chamber (2) to suck off air and thus to increase road grip of the vehicle (1), **characterized by** the following:
- the chamber (2) closed at the top and the perimeter has a closed base, forms a flexible mat (13a) and seals this,
- at least one inflatable airbag (15) is fitted into the chamber (2) above the mat (13a),
- at least one outlet valve (11) is fitted between the chamber (2) and the open air for air discharged from the chamber (2), and
- a relief valve (32) is installed against failures.

7. Emergency braking system pursuant to Claim 6, **characterized by** way of the flexible mat (13, 13a) having the following characteristics:
- at least partly of plastic or rubber-like material,
- a labyrinth-like or lamellar formed sealing profile (14) at its perimeter and at least at the edge of its bottom side,
- notches like grooves to improve its flexibility especially in the middle zone beneath the internal pads (15), and
- a base of abrasion-proof and wear-resistant material such as tire rubber.

8. Emergency braking system pursuant to Claim 2 and 6, **characterized by** the following: in the specified chamber (2), spacers (10) are fitted for the airbag (15) in the form of blocks and/or ribs and are fitted aerodynamically to the vent in the suction tube (8) to keep the suction chamber (9) free despite inflated airbag (15) and strongly suspended vehicle.

9. Emergency braking system pursuant to Claim 6, **characterized by** the following: the relief valve (32) is connected with a sensing element (33, 34, 35) on the mat (13a) in order to open the valve (32) in case of failure if there is inadmissible depletion of the mat (13a).

10. Emergency braking system pursuant to Claim 1 and 6, or pursuant to the foregoing Claims, **characterized by** the following: it is allocated a central control unit (27) to which the following parts are connected:
- an emergency alarm (25) with an emergency button (26) for manual and automatic triggering of emergency braking,
- a connection line to an existing anti-lock braking system in order to be able to use its information to trigger and/or control the emergency braking system,
- a slippery surface sensor (28) for automatic identification of wintery, slippery roads and to activate the spikes (19),
- a gas generator (5) for the tubular side pad or the external bag (23),
- a gas generator with at least 2-steps (6, 6a) or a pressure regulator for the internal pad (15) and the optional spikes application and
- a vacuum generator (7) for the vacuum chamber (2).

11. Emergency braking system pursuant to Claim 2 and 6, whereby the specified mat (13, 13a) is specially formed as a summer mat and is **characterized by** the following: at least one elastic ductile, pad-like receptacle (40) is fitted in the vacuum chamber (2) between the airbag (15) and the mat (13, 13a), which contains a braking agent (41) in the form of a paste or fluid with a substance which has an adhesive effect after release, and the pad (40) has openings fitted above the holes (42) included in the mat (13, 13a) through which the specified braking agent (41) is compressible under the mat in the case of increased pressure in the airbag (15) in order to additionally increase road grip of the vehicle and to improve reduction of the braking distances in extreme emergencies.

12. Emergency braking system for vehicles, in particular motor vehicles, with at least one chamber formed or existing under the vehicle, and one suction device connected to the chamber, to withdraw air by suction and thereby improve the road grip of the vehicle, **characterized by** having the following:
- the chamber (2) has a closed base,
- it forms a flexible mat (13a) and seals
- a flexible edge seal (4, 39) is fitted at the perimeter of the mat (13a),
- a flexible and piston-like descending lid (22) is fitted above the edge seal (4, 39) and the mat (13a),
- spacers (10, 10a) are fitted in the chamber (2) between the mat (13a) and the lid (22) to support the chamber (2), and
- an inflatable airbag (44) is fitted between the chamber lid (22) and the vehicle base to press the braking and sealing mat (13a) extensively to the base through the support elements (10, 10a).

13. Emergency braking system for vehicles, in particular motor vehicles, with at least one formed or existing chamber (2) under the vehicle and one suction device (7), connected to the chamber (2) to suck off air and thus to increase road grip of the vehicle (1), **characterized by** the following:
- the chamber (2) has an almost closed base,
- it is formed to a flexible mat (13b) and sealed, which has at least one central opening (16) from the base to the suction chamber (9) of the chamber (2),
- a highly tensile screen (45) or net is fitted on the mat (13b),
- an elastic seal (4, 39) is located at least on the edge of the mat (13b), and
- above this a lid (22) with spacers (10, 10a) is fitted which extends the suction chamber (9) of the chamber (2) to the lid edge.

14. Emergency braking system for vehicles, in particular motor vehicles, with at least one formed or existing chamber (2) under the vehicle and one suction device (7), connected to the chamber (2) to suck off air and thus to increase road grip of the vehicle (1), **characterized in** terms of the chamber (2) by the following:
- it is limited at the top by the vehicle base or a lid (22),
- it has a flexible mat (13b) at the bottom designed as a sealing and braking mat and which has at least one opening (16),
- it has a screen (45) above the opening (16) in or on the mat (13b) which serves as a coarse filter for vacuum air and can increase mat stability,
- it has an inflatable airbag (43) between the mat (13b) and the vehicle base or lid (22) in the form of a ring pad around the opening (16),
- it has a trough-shaped formed suction chamber (9) above or in the specified airbag (43) on the vehicle base (22), and
- it has a pressure relief valve (11).

15. Emergency braking system for vehicles, in particular motor vehicles, with at least one formed or existing camber (2) under the vehicle and one suction device (7), connected to the chamber (2) to suck off air and thus to increase road grip of the vehicle (1), **characterized by** the following:
- the suction device covers a vacuum pump (7) which can be optionally driven from the starter (47) of the vehicle engine (46) via a switchable clutch (48),
- an override clutch (50) serves as a clutch between the starter (47) and the vacuum pump (7), and
- the starter (47) can be switched in both directions of rotation.

## Revendications

1. Système de freinage d'urgence pour véhicules, notamment pour véhicules automobiles, comprenant sous le véhicule au moins une chambre (2) ajoutée ou existante et un dispositif d'aspiration (7) relié à la chambre (2) afin d'aspirer l'air contenu dans celle-ci et d'accroître ainsi l'adhérence du véhicule (1) au sol, **caractérisé par le fait qu'**au moins une poche d'air gonflable (15) est installée dans la chambre (2) et qu'au moins une soupape de décharge (11) est disposée sur la chambre (2), cette soupape permettant d'évacuer vers l'extérieur l'air refoulé hors de la chambre (2) par la poche d'air activée (15).

2. Système de freinage d'urgence d'après la revendication 1, sur lequel la chambre mentionnée (2) se **caractérise par le fait qu'**elle
- est constituée et encadrée d'une poche d'air gonflable extérieure en forme de tube (4),
- contient au moins une poche d'air intérieure susmentionnée (15), et que
- un tapis flexible (13) au moins est placé sous les poches d'air susmentionnées (4, 15), ce tapis servant à protéger les poches d'air (4, 15) et à étancher au moins les bords de la chambre (2), et servant comme tapis de freinage (13).

3. Système de freinage d'urgence d'après les revendications 1 et 2, **caractérisé par le fait que** la poche d'air intérieure (15) au moins est agencée de manière extensible en hauteur et/ou en diamètre selon la pression de gonflage modifiable ; à cette occasion, la pression de gonflage peut être contrôlée ou régulée en fonction du besoin.

4. Système de freinage d'urgence d'après la revendication 2, **caractérisé par le fait que**
- le tapis flexible (13) est doté de crampons mobiles axialement et élastiques, mais normalement inactifs (19),
- la poche d'air intérieure (15) au moins est disposée au-dessus des têtes des crampons afin de presser les crampons inactifs (19) hors du tapis (13) sur une longueur variable pour qu'ils interviennent, en cas de besoin, en fonction de la pression de gonflage dans la poche d'air (15), et
- le tapis (13) comprend au moins sur sa surface de base ou semelle des substances intégrées ou appliquées semblables à de la colle (20) et opérant sous l'action de la pression et du frottement sur la voie de circulation, afin de renforcer l'adhérence au sol lors du freinage d'urgence.

5. Système de freinage d'urgence d'après la revendication 4, **caractérisé par le fait qu'**un détecteur de chaussée glissante (28) est relié au choix à un thermomètre (29) pour le contrôle de l'adhérence au sol avec l'arrivée d'air comprimé (6, 6a), ou à un régulateur de pression opérant au moins pour le coussin d'air intérieur (15) placé au-dessus des crampons (19), afin d'accroître si besoin la pression sur les crampons (19) de telle sorte qu'ils interviennent au moins en cas de verglas ou de neige sur la chaussée.

6. Système de freinage d'urgence pour véhicules, notamment pour véhicules automobiles, comprenant sous le véhicule au moins une chambre (2) ajoutée ou existante et un dispositif d'aspiration (7) relié à la chambre (2) afin d'aspirer l'air contenu dans celle-ci et d'accroître ainsi l'adhérence du véhicule (1) au sol, **caractérisé par le fait que**
- la chambre (2) fermée en haut et sur son périmètre possède un fond fermé, constitué et étanché par un tapis flexible (13a),
- une poche d'air gonflable (15) au moins est installée dans la chambre (2) au-dessus du tapis (13a),
- une soupape de décharge (11) au moins est installée entre la chambre (2) et l'atmosphère extérieure pour l'air refoulé de la chambre (2), et
- une soupape de sûreté (32) est installée contre les dérangements.

7. Système de freinage d'urgence d'après la revendication 6, **caractérisé par le fait que** le tapis flexible (13, 13a)
- est composé au moins partiellement de plastique ou d'un matériau semblable à du caoutchouc,
- est doté, sur son périmètre et au moins sur les bords de sa face inférieure, d'une garniture d'étanchéité profilée (14) en forme de labyrinthe ou de lamelles,
- possède en particulier sur sa zone centrale, sous le coussin d'air intérieur (15), des entailles telles que des cannelures pour améliorer sa flexibilité, et
- possède une semelle fabriquée dans un matériau résistant à l'abrasion et à l'usure tel que le caoutchouc pour pneus.

8. Système de freinage d'urgence d'après les revendications 2 et 6, **caractérisé par le fait que** la chambre susmentionnée (2) contient des écarteurs (10) pour la poche d'air (15) sous forme de blocs et/ou d'ailettes, ceux-ci étant positionnés en direction de l'ouverture d'aspiration dans le tuyau d'aspiration (8) afin de maintenir dégagé l'espace d'aspiration (9) bien que la poche d'air (15) soit gonflée et que la suspension du véhicule se comprime fortement.

9. Système de freinage d'urgence d'après la revendication 6, **caractérisé par le fait que** la soupape de sûreté (32) est reliée à un moyen capteur (33, 34, 35) sur le tapis (13a) afin d'ouvrir la soupape (32) en cas de dérangement lorsque le tapis (13a) se renfle de manière non autorisée.

10. Système de freinage d'urgence d'après les revendications 1 et 6 ou d'après les revendications précédentes, **caractérisé par le fait qu'**il possède un appareil de contrôle central (27) sur lequel sont raccordées les composantes suivantes :
- un détecteur d'urgence (25) doté d'un bouton d'urgence (26) permettant de déclencher manuellement et automatiquement le freinage d'urgence,
- une conduite de raccord vers un système antiblocage déjà présent, afin de pouvoir exploiter les informations de celui-ci concernant le déclenchement et/ou la commande du système de freinage d'urgence,
- un détecteur de chaussée glissante (28) pour la reconnaissance automatique des chaussées glissantes ou verglacées en hiver et pour l'activation des crampons (19),
- un générateur de gaz (5) pour le coussin d'air de bordure en forme de tube ou la poche d'air extérieure (23),
- un générateur de gaz à deux étages au moins (6, 6a) ou un régulateur de pression pour le coussin d'air intérieur (15) et l'actionnement au choix des crampons, et
- le générateur de vide (7) pour la chambre de dépression (2).

11. Système de freinage d'urgence d'après les revendications 2 et 6, sur lequel le tapis susmentionné (13, 13a) est spécialement conçu comme tapis d'été et **caractérisé par le fait qu'**au moins un récipient semblable à un coussin et élastiquement déformable (40) est installé dans la chambre de dépression mentionnée (2) entre la poche d'air (15) et le tapis (13, 13a), ledit récipient contenant un agent de freinage (41) sous forme de pâte ou de liquide avec une substance agissant comme de la colle après libération, et **caractérisé par le fait que** le coussin (40) présente des ouvertures positionnées en face des trous (42) situés dans le tapis (13, 13a), ce grâce à quoi l'agent de freinage susmentionné (41) peut être pressé sous le tapis en cas de pression accrue dans la poche d'air (15), afin d'accroître encore l'adhérence du véhicule au sol et de pouvoir raccourcir encore plus les distances de freinage dans les cas d'urgence extrême.

12. Système de freinage d'urgence pour véhicules, notamment pour véhicules automobiles, comprenant sous le véhicule au moins une chambre ajoutée ou existante et un dispositif d'aspiration relié à la chambre afin d'aspirer l'air contenu dans celle-ci et d'accroître ainsi l'adhérence du véhicule au sol, **caractérisé par le fait que**
- la chambre (2) fermée en haut et sur son périmètre possède un fond fermé,
- ledit fond est constitué et étanché par un tapis flexible (13a),
- une garniture d'étanchéité des bords (4, 39) est posée sur le périmètre du tapis (13a),
- un couvercle (22) flexible, également immersible comme un piston, est fixé au-dessus de la garniture d'étanchéité des bords (4, 39) et du tapis (13a),
- des écarteurs (10, 10a) sont installés dans la chambre (2) entre le tapis (13a) et le couvercle (22) pour soutenir la chambre (2), et
- une poche d'air gonflable (44) est installée entre le couvercle de la chambre (22) et le sol du véhicule, afin de presser largement le tapis de freinage et d'étanchement (13a) contre le sol à travers les éléments de soutien (10, 10a).

13. Système de freinage d'urgence pour véhicules, notamment pour véhicules automobiles, comprenant sous le véhicule au moins une chambre (2) ajoutée ou existante et un dispositif d'aspiration (7) relié à la chambre (2) afin d'aspirer l'air contenu dans celle-ci et d'accroître ainsi l'adhérence du véhicule (1) au sol, **caractérisé par le fait que**
- la chambre (2) possède un fond quasiment fermé,
- ledit fond est constitué et étanché par un tapis flexible (13b) possédant au moins une ouverture centrale (16) du fond vers l'espace d'aspiration (9) de la chambre (2),
- une grille résistante à la traction (45) ou un filet est monté sur ou dans le tapis (13b),
- une garniture élastique (4, 39) se trouve au moins sur les bords (13b), et
- au-dessus, un couvercle (22) avec des écarteurs (10, 10a) est fixé, lesdits écarteurs étendant l'espace d'aspiration (9) de la chambre (2) jusqu'au bord du couvercle.

14. Système de freinage d'urgence pour véhicules, notamment pour véhicules automobiles, comprenant sous le véhicule au moins une chambre (2) ajoutée ou existante et un dispositif d'aspiration (7) relié à la chambre (2) afin d'aspirer l'air contenu dans celle-ci et d'accroître ainsi l'adhérence du véhicule (1) au sol, **caractérisé par le fait que** la chambre (2)
- est limitée en haut par le sol du véhicule ou un couvercle (22),
- possède en bas un tapis flexible (13b) réalisé sous forme de tapis d'étanchement et de freinage et ayant au moins une ouverture centrale (16),
- possède une grille (45) au-dessus de l'ouverture sur ou dans le tapis (13b), ladite grille servant de filtre grossier pour l'air aspiré et pouvant augmenter la résistance du tapis,
- possède, entre le tapis (13b) et le sol du véhicule ou couvercle (22), une poche d'air gonflable (43) en forme de coussin circulaire autour de l'ouverture (16),
- possède, au-dessus ou à l'intérieur de la poche d'air susmentionnée (43) contre le sol du véhicule (22), un espace d'aspiration en forme d'auge (9), et
- possède une soupape de décharge de la surpression (11).

15. Système de freinage d'urgence pour véhicules, notamment pour véhicules automobiles, comprenant sous le véhicule au moins une chambre (2) ajoutée ou existante et un dispositif d'aspiration (7) relié à la chambre (2) afin d'aspirer l'air contenu dans celle-ci et d'accroître ainsi l'adhérence du véhicule (1) au sol, **caractérisé par le fait que**
- le dispositif d'aspiration comprend une pompe à vide (7) pouvant être entraînée, au choix, par le démarreur (47) du moteur du véhicule (46) au moyen d'un embrayage (48),
- une roue libre (50) entre le démarreur (47) et la pompe à vide (7) sert d'embrayage, et
- le démarreur (47) peut être commuté au choix dans les deux sens de rotation.
